# EUROPÄISCHE PATENTSCHRIFT

(11) **EP 2 130 577 B1**
(45) Veröffentlichungstag und Bekanntmachung des Hinweises auf die Patenterteilung: **02.12.2015**
(21) Anmeldenummer: 09161224.2
(22) Anmeldetag: 27.05.2009
(51) Int. Cl.: B01D 53/04, B01D 53/26, B60T 17/00

(54) **Luftaufbereitungsvorrichtung, insbesondere einer Luftdruckbremsanlage mit einem Abscheider für flüssige Fluide**
Air treatment device, in particular of a pressurised air brake assembly with a separator for fluid liquids
Dispositif de préparation d'air, notamment d'une installation de freinage à air comprimé dotée d'un séparateur pour fluides liquides

(30) Priorität: 06.06.2008 DE 202008007635 U
(43) Veröffentlichungstag der Anmeldung: 09.12.2009
(73) Patentinhaber: MANN+HUMMEL GmbH, 71638 Ludwigsburg (DE)
(72) Erfinder: Amesöder, Dieter, 71640 Ludwigsburg (DE); Koch, Eugen, 75328, Schömberg (DE); Schleiden, Thomas, 71720 Oberstenfeld (DE); Eberle, Jürgen, 72076, Tübingen (DE); Zwisler, Johannes, 71229 Leonberg (DE); Niemeyer, Stephan, 71711, Steinheim (DE)

(56) Entgegenhaltungen:
- EP-A- 1 048 540
- EP-A- 1 529 562
- WO-A-95/07831
- DE-A1- 19 627 889
- DE-A1-102005 017 511

## Beschreibung

### Technisches Gebiet

Die Erfindung betrifft eine Luftaufbereitungsvorrichtung insbesondere einer Luftdruckbremsanlage mit einem Abscheider für flüssige Fluide, insbesondere Öl oder Wasser, der ein im Wesentlichen zylindrisches Gehäuse aufweist, das an seinen Stirnseiten über einen Gehäusedeckel und einen Gehäuseboden verfügt, und das in seinem Inneren einen Abscheidekanal aufweist, den die zu reinigende Luft durchströmen kann, wobei der Abscheidekanal in Umfangsrichtung des Gehäuses gebogen verläuft und wenigstens eine Eintrittsöffnung für die zu reinigende Luft, wenigstens eine Fluid-Austrittsöffnung für abgeschiedenes Fluid und wenigstens eine Reinluft-Austrittsöffnung für gereinigte Luft aufweist. Ferner betrifft die Erfindung einen Abscheider für flüssiges Fluid für eine derartigen Luftaufbereitungsvorrichtung.

### Stand der Technik

Derartige bekannte Luftaufbereitungsvorrichtungen dienen vorzugsweise dazu, die von einem Kompressor gelieferte Druckluft zu entfeuchten, bevor diese einem Druckluftverbraucher, insbesondere einer Luftdruckbremsanlage, zugeführt wird. Die von dem Kompressor gelieferte Druckluft ist insbesondere mit in dem Kompressor als Schmiermittel verwendetem Öl verschmutzt; weitere Verschmutzungen stammen beispielsweise aus der Atmosphäre. Es ist bekannt, zur Entfernung derartiger und anderer Verschmutzungen einen so genannten Ölabscheider einzusetzen, den die Druckluft durchströmen muss.

Aus der DE 10 2005 017 511 A1 ist eine Luftaufbereitungsvorrichtung mit einem Ölabscheider bekannt, der einen ersten Raum und einen zweiten Raum aufweist. Die Räume sind als im Wesentlichen axialsymmetrische Ringräume mit gemeinsamer Achse ausgelegt. In den ersten Raum ist zu reinigende Druckluft einleitbar. In dem ersten Raum sind Luftleitmittel angeordnet, durch die Strömungsgeschwindigkeit der durchströmenden Luft änderbar ist. Die in dem ersten Raum gereinigte Luft ist dem zweiten Raum und von dort aus einer Filtereinheit zuführbar. Um die beiden Ringräume und die Luftleitmittel zu realisieren, ist eine Vielzahl von komplex geformten Bauteilen erforderlich, die miteinander verbunden werden müssen.

Der Erfindung liegt die Aufgabe zugrunde, eine Luftaufbereitungsvorrichtung und einen Abscheider für eine Luftaufbereitungsvorrichtung zu gestalten, die einfach mit möglichst wenigen Bauteilen realisierbar sind und eine optimale Abscheidung für flüssige Fluide ermöglichen.

### Offenbarung der Erfindung

Diese Aufgabe wird erfindungsgemäß dadurch gelöst, dass der Abscheidekanal grob spiralförmig verläuft und stromabwärts der Fluid-Austrittsöffnung eine Luftleitrampe zur Leitung der Reinluft zur Reinluft-Austrittsöffnung aufweist.

Erfindungsgemäß ist also eine Luftleitrampe vorgesehen, die einfach beispielsweise durch entsprechende Formgebung des Gehäusebodens oder des Gehäusedeckels realisiert werden kann und mit welcher die Reinluft zur Reinluft-Austrittsöffnung geleitet wird. Durch die Rampenneigung wird verhindert, dass bereits abgeschiedene Flüssigkeit mitgeführt wird, da diese sich aufgrund der Trägheit am Fuß der Luftleitrampe absetzt. Der Abscheider kann insgesamt aus nur zwei Bauteilen zusammengesetzt werden, indem der Abscheidekanal einfach durch die Gehäusewände, den Gehäusedeckel und den Gehäuseboden begrenzt wird. Das Gehäuse und der Gehäusedeckel können dabei beispielsweise über ein Spritzgussverfahren einfach aus Kunststoff gegossen werden. Der Gehäusedeckel kann mittels Ultraschallschweißen oder Kleben einfach mit dem Gehäuse verbunden werden.

Erfindungsgemäß verläuft der Abscheidekanal grob spiralförmig. Bei einem derartig geformten Abscheidekanal kann eine effiziente Abscheidung von flüssigem Fluid insbesondere von Öl, Kraftstoff und/oder Wasser, realisiert werden. Die Fluidpartikel werden dabei aufgrund ihrer größeren Masse als Luft durch die Zentrifugalkraft beim Durchströmen des Abscheidekanals zur kurvenäußeren Wand abgetrieben und bleiben dort zunächst zu einem Film verdichtet haften, um dann der Schwerkraft folgend auf den Gehäuseboden abzusinken.

Bei einer weiteren vorteilhaften Ausführungsform kann die wenigstens eine Eintrittsöffnung von außerhalb des Gehäuses gut zugänglich in einer radial äußeren Wand des Abscheidekanals angeordnet sein.

Ferner kann die Innenseite der radial äußeren Wand des Abscheidekanals wenigstens einen Abschnitt mit einem verringerten Radius aufweisen. Durch den verringerten Radius erhöht sich der Abscheidegrad der radial außen strömenden Flüssigkeitspartikel an der Wand des Abscheidekanals. Wenn lediglich der Radius der radial äußeren Wand verringert ist, kann darüber hinaus einfach eine Verengung des Abscheidekanals erreicht werden, in der die Strömungsgeschwindigkeit verändert wird. Dies wirkt sich ebenfalls positiv auf den Abscheidegrad aus. Im Anschluss an den Abschnitt mit verringertem Radius kann sich der Abscheidekanal wieder aufweiten, wodurch die Luftströmung beruhigt wird, was sich zusätzlich günstig auf den Abscheidegrad auswirkt.

Vorteilhafterweise kann im Abscheidekanal wenigstens eine Prallwand angeordnet sein, die eine zum Strömungsweg senkrechte Flächenkomponente aufweist. Die trägen Flüssigkeitströpfchen prallen beim Durchströmen des Abscheidekanals gegen die Prallwand und bleiben dort zunächst als Film haften, um dann zum Gehäusebodens abzusinken.

Um eine weitere Verbesserung der Abscheidung der Fluidpartikel zu erreichen, können wenigstens zwei Prallwände labyrinthartig zueinander versetzt angeordnet sein.

Bei einer weiteren vorteilhaften Ausführungsform kann der Gehäusedeckel an seiner dem Abscheidekanal abgewandten Außenseite einen Aufbau aufweisen, der sich wenigstens im Bereich der Luftleitrampe entlang des Abscheidekanals erstreckt und zum Abscheidekanal hin offen ist, wobei in einer radial inneren und/oder einer radial äußeren Seitenwand des Aufbaus wenigstens eine Reinluft-Austrittsöffnung angeordnet ist. Über die platzsparend seitlich im Aufbau angeordnete Reinluft-Austrittsöffnung kann die Reinluft in axialer Richtung aus dem Abscheidekanal abströmen. Die Anordnung der Reinluft-Austrittsöffnung in einer Seitenwand des Aufbaus hat darüber hinaus den Vorteil, dass eine weitere Umleitung der Strömung vom Abscheidekanal durch die Reinluft-Austrittsöffnung realisiert wird, wodurch eine zusätzliche Abscheidemöglichkeit geschaffen wird. Außerdem wird durch die seitliche Anordnung der Reinluft-Austrittsöffnung die direkte Sicht in den Abscheidekanal verhindert, so dass emulsions- und partikelartige Schmutz- und Rußrückstände von au-ßerhalb des Abscheiders betrachtet optisch weitestgehend verborgen bleiben.

Günstigerweise kann eine Mehrzahl von Reinluft-Austrittsöffnungen in der radial inneren und/oder der radial äußeren Seitenwand des Aufbaus angeordnet sein. Auf diese Weise wird die Austrittsfläche vergrößert, wodurch ein Rückstau der Reinluft vermieden wird.

Damit die Reinluft über alle Reinluft-Austrittslöcher des Abscheiders gleichmäßig ausströmen kann, können vorteilhafterweise die Strömungsquerschnitte der von der Luftleitrampe weiter entfernten Reinluft-Austrittsöffnungen größer sein als die Strömungsquerschnitte der näher gelegenen Reinluft-Austrittsöffnungen.

Bei einer weiteren vorteilhaften Ausführungsform kann wenigstens eine Fluid-Austrittsöffnung im Gehäuseboden angeordnet sein. Bei einer Anordnung des Abscheiders, bei der der Gehäuseboden räumlich nach unten zeigt, kann so einfach das abgeschiedene Fluid durch die Fluid-Austrittsöffnung nach unten aus dem Abscheidekanal abfließen. Damit das abgeschiedene Fluid besser ablaufen kann, kann vorteilhafterweise der Gehäuseboden im Einbauzustand des Abscheiders zur Fluid-Austrittsöffnung hin abschüssig verlaufen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Es zeigen:
- Figur 1: schematisch eine isometrische Darstellung einer Luftaufbereitungsvorrichtung mit einem Abscheider für flüssige Fluide;
- Figur 2: schematisch eine isometrische Explosionsdarstellung der Bauteile des Abscheiders aus der Figur 1;
- Figur 3: schematisch eine isometrische Darstellung eines Gehäuseunterteils des Abscheiders aus den Figuren 1 und 2 von schräg unten betrachtet;
- Figur 4: schematisch eine isometrische Darstellung des Gehäuseunterteils des Abscheiders aus den Figuren 1 bis 3 von schräg oben betrachtet;
- Figur 5: schematisch eine isometrische Darstellung des Gehäuseunterteils des Abscheiders aus den Figuren 1 bis 4 im Teilschnitt von schräg oben betrachtet.

### Ausführungsform(en) der Erfindung

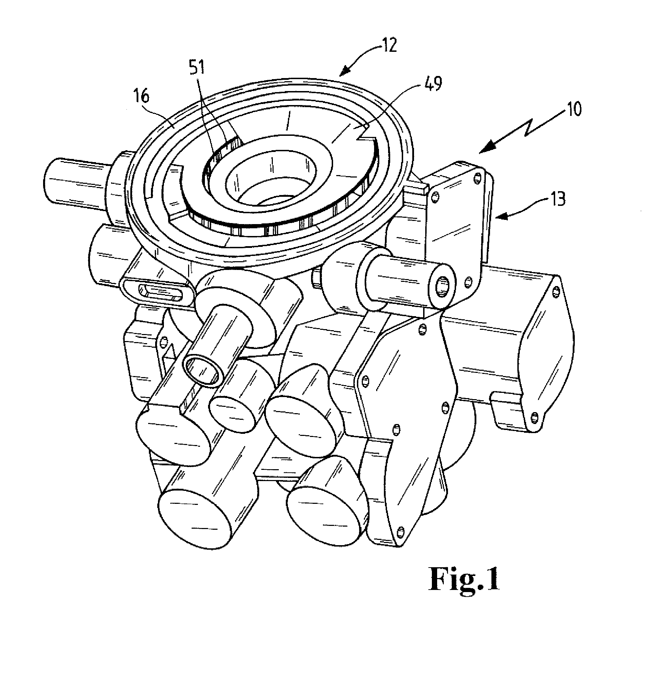

In Figur 1 ist eine insgesamt mit dem Bezugszeichen 10 versehene Luftaufbereitungsvorrichtung einer ansonsten nicht gezeigten Luftdruckbremsanlage dargestellt. Die Luftaufbereitungsvorrichtung 10 umfasst in der Figur 1 oben einen Abscheider 12 für flüssige Fluide, beispielsweise Öl und Wasser, aus der aufzubereitenden Druckluft. Der Abscheider 12 ist von oben in einem Lufttrocknergehäuse 13 eingesteckt.

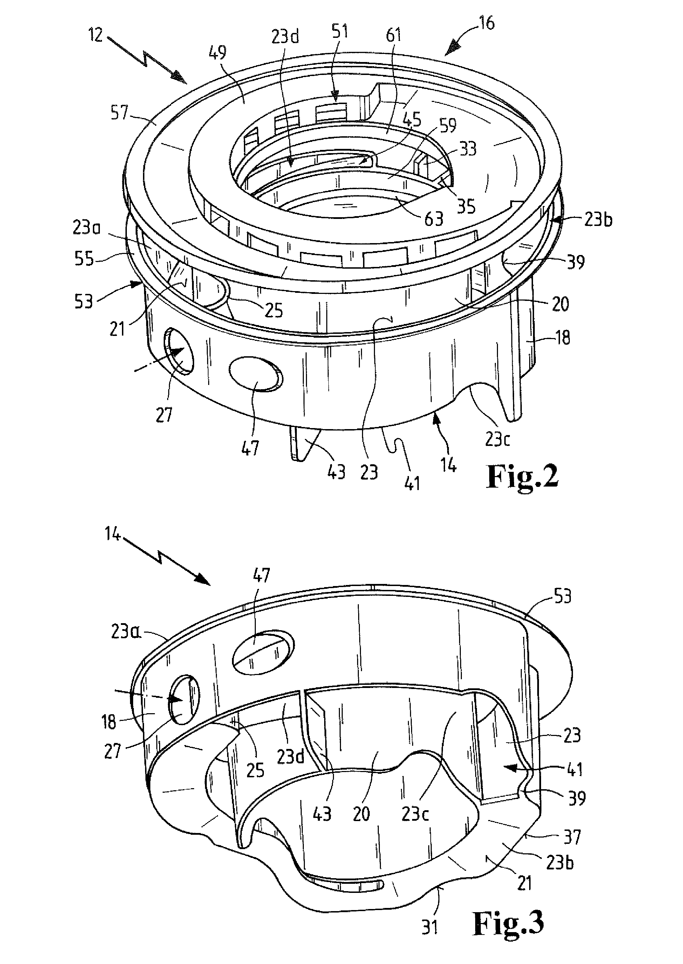

Der Abscheider 12 ist aus Kunststoff. Er weist ein in den Figuren 2 bis 5 gezeigtes zylindrisches Gehäuseunterteil 14 und einen in den Figuren 1 und 2 gezeigten Gehäusedeckel 16 auf.

Das Gehäuseunterteil 14 verfügt über eine Außenwandung 18 und eine zu dieser koaxiale ebenfalls zylinderförmige Innenwandung 20.

Die Außenwandung 18, die Innenwandung 20, der Gehäusedeckel 16 und ein Gehäuseboden 21 begrenzen einen Abscheidekanal 23, den die zu reinigende Luft vom Gehäusedeckel 16 aus betrachtet im Uhrzeigersinn durchströmen kann. Der Abscheidekanal 23 weist vier Abschnitte auf, nämlich in Strömungsrichtung betrachtet einen Eintrittsabschnitt 23a, einen Prallabschnitt 23b, einen Fluidaustrittsabschnitt 23c und einen Luftrampenabschnitt 23d. Der Eintrittsabschnitt 23a, der Prallabschnitt 23b und der Fluidaustrittsabschnitt 23c erstrecken sich entlang des Strömungsweges jeweils etwa über ein Drittel des Umfangs des Gehäuseunterteils 14. Der Luftrampenabschnitt 23d verläuft parallel zum Eintrittsabschnitt 23a und grenzt durch eine Zwischenwand 25 von letzterem getrennt an dessen radial innere Seite an. Die Zwischenwand 25 erstreckt sich vom Gehäuseboden 21 bis zum Gehäusedeckel 16. Sie ist am Gehäuseboden 21 angeformt und gegenüber dem Gehäusedeckel 16 abgedichtet.

Im Eintrittsabschnitt 23a und im Prallabschnitt 23b nimmt der axiale Abstand des Gehäusebodens 21 vom Gehäusedeckel 16 in Hauptströmungsrichtung zu, so dass der Gehäuseboden 21 in eingebautem Zustand, in dem die Gehäuseachse vertikal verläuft, ein Gefälle aufweist, wodurch das abgeschiedene Fluid besser ablaufen kann. Der dem Gehäuseboden 21 zugewandte Rand der Außenwandung 18 schließt mit dem Gehäuseboden 21 ab. Ebenso schließt der untere Rand der Innenwandung 20 dort, wo er auf den Gehäuseboden 21 stößt, mit diesem ab. So werden unnötigen Hohlräume vermieden, wodurch der Herstellungsprozess des Gehäuseunterteils 14 vereinfacht wird. Die oberen, dem Gehäusedeckel 16 zugewandten Ränder der Außenwandung 18 und der Innenwandung 20 verlaufen eben.

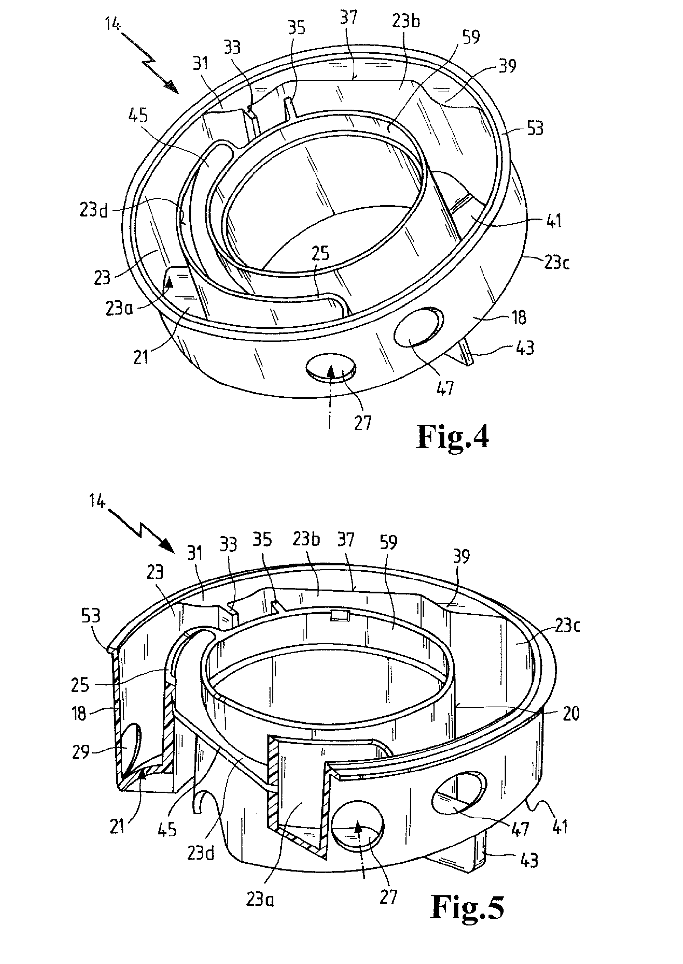

Am Anfang des Eintrittsabschnitts 23a ist in der Außenwandung 18 eine Eintrittsöffnung 27 für zu reinigende Luft angeordnet. Dort ist der Gehäuseboden 21 dem Gehäusedeckel 16 am nächsten, so dass in eingebautem Zustand dort die höchste Lage des Gehäusebodens 21 ist. Stromabwärts der Eintrittsöffnung 27 kurz vor dem Ende des Eintrittsabschnitts 23a befindet sich in der Außenwandung 18 eine in der Figur 5 gezeigte sekundäre Eintrittsöffnung 29, über die in hier nicht weiter interessierender Weise im Kreislauf geführte Luft, beispielsweise ein Leckageluftstrom, zugeführt werden kann. Am Ende des Eintrittsabschnitts 23a endet auch die Zwischenwand 25.

Im Prallabschnitt 23b weist die Außenwandung 18 einen radial nach innen gebogenen Abschnittsteil 31 auf. An der radial innersten Stelle des Abschnittsteils 31, die einen im Vergleich zum Eintrittsabschnitt 23a verringerten Radius hat, ist eine erste Prallwand 33 angeformt. Die erste Prallwand 33 erstreckt sich in radialer Richtung und in axialer Richtung, weist also eine zum Hauptströmungsweg senkrechte Flächenkomponente auf.

Stromabwärts der ersten Prallwand 33 ist zu dieser versetzt eine zweite Prallwand 35 an der radial äußeren Seite der Innenwandung 20 angeformt. Die zweite Prallwand 35 erstreckt sich ebenso wie die erste Prallwand 33 axial und etwa radial zu Gehäuseunterteil 14. Die beiden Prallwände 33 und 35 realisieren gemeinsam mit dem Abschnittsteil 31 einen labyrinthartigen Strömungsweg, in dem die flüssigen Fluide aufgrund ihrer Massenträgheit gegen die Außenwandung 18 beziehungsweise gegen die Prallwände 33 und 35 prallen und dort als Film zunächst haften bleiben, und dann der Schwerkraft folgend zum Gehäuseboden 21 sinken.

Stromabwärts des Abschnittsteils 31 weist die Außenwandung 18 einen geraden Abschnittsteil 37 auf, der eine die Gehäuseachse nicht schneidende Sekante der Innenkontur der Außenwandung 18 darstellt. Der gerade Abschnittsteil 37 realisiert eine Querschnittsverkleinerung des Abscheidekanals 23 und eine schräge Prallfläche für die Fluide.

Auf dem Strömungsweg kurz vor dem Ende des Prallabscheideabschnitts weist die Außenwandung 18 eine weitere radial nach innen geformte Erhebung 39 auf, welche zu einer weiteren Querschnittsverkleinerung des Abscheidekanals 23 führt.

Im stromabwärts folgenden Fluidaustrittsabschnitt 23c ist der Gehäuseboden 21 unterbrochen. Die Unterbrechung bildet eine Fluid-Austrittsöffnung 41 für das abgeschiedene Fluid. Stromabwärts der Fluid-Austrittsöffnung 41 ist unten am Gehäuseboden 21 eine Prallplatte 43 einstückig angeformt, welche sich senkrecht zur Hauptströmungsrichtung axial und etwa radial zur Gehäuseachse erstreckt.

An den Fluidaustrittsabschnitt 23c schließt sich der Luftrampenabschnitt 23d an. Am Anfang des Luftrampenabschnitts 23d befindet sich der Gehäuseboden 21 etwa auf gleicher axialer Höhe wie am Anfang des Eintrittsabschnitts 23a. Im Verlauf des Luftrampenabschnitts 23d nimmt der axiale Abstand des Gehäusebodens 21 zu dem Gehäusedeckel 16 kontinuierlich ab; der ansteigende Gehäuseboden 21 bildet so eine Luftleitrampe 45. In einem Bereich zwischen der Fluid-Austrittsöffnung 41 und einem sich radial zur Gehäuseachse erstreckenden Abschnitt der Zwischenwand 25, der auch die Begrenzung am Anfang des Eintrittsabschnitts 23a bildet und als weitere radial außen gelegene Prallfläche wirkt, erstreckt sich der Luftrampenabschnitt 23d in radialer Richtung über die gesamten Ausdehnung zwischen der Außenwandung 18 und der Innenwandung 20. Dort weist die Außenwandung 18 eine weitere Öffnung 47 auf, an die beispielsweise ein nicht gezeigter Drucksensor angeschlossen werden kann.

Der Gehäusedeckel 14 weist an seiner dem Abscheidekanal 23 abgewandten Oberseite einen Aufbau 49 auf, der sich in Umfangsrichtung oberhalb des Luftrampenabschnitts 23d und des Fluidaustrittsabschnitts 23c erstreckt. Der Aufbau 49 ist zum Abscheidekanal 23 hin offen. Im Bereich des Luftrampenabschnitts 23d ist der Aufbau 49 in radialer Richtung gegenüber dem Bereich oberhalb des Fluidaustrittsabschnitts 23c verjüngt, so dass er sich dort nur über den Luftrampenabschnitt 23d erstreckt, nicht jedoch über den Eintrittsabschnitt 23a.

Der Aufbau 49 weist eine radial innere und eine radial äußere Seitenwand auf, in denen sich jeweils eine Mehrzahl von Reinluft-Austrittsöffnungen 51 befindet. Die Strömungsquerschnitte der von der Luftleitrampe 45 am weiter entfernten Reinluft-Austrittsöffnungen 51 sind größer als die Strömungsquerschnitte der näher gelegenen Reinluft-Austrittsöffnungen 51.

Der obere Rand der Außenwandung 18 weist einen radial nach außen gebogenen Kragen 53 auf, der eine Aufnahme für eine in der Figur 2 gezeigte umlaufende O-Ring Dichtung 55 bildet. Der Gehäusedeckel 16 weist eine mit dem Kragen 53 korrespondierende umfängliche Stufe 57 auf.

Die Innenwandung 20 verfügt im Bereich ihres dem Gehäusedeckel 16 zugewandten oberen Randes an der radial inneren Seite über eine umfängliche Stufe 59. Die Stufe 59 dient zur Aufnahme eines Ringstegs 61, der sich an der dem Gehäuseunterteil 14 zugewandten Unterseite des Gehäusedeckels 16 befindet. Zwischen dem Ringsteg 61 und der Stufe 59 ist eine zweite O-Ring Dichtung 63 angeordnet, die das Gehäuse des Abscheiders 12 dort abdichtet.

Bei der Montage des Abscheiders 12 werden zunächst die O-Ring Dichtungen 55 und 63 am Gehäuseunterteil 14 platziert. Anschließend wird der Gehäusedeckel 16 in axialer Richtung auf das Gehäuseunterteil 14 montiert und mittels Ultraschallschweißen oder Verkleben mit diesem verbunden. Der so vormontierte Abscheider 12 wird dann von oben in das Lufttrocknergehäuse 13 eingesteckt. Die Eintrittsöffnung 27 und die sekundäre Eintrittsöffnung 29 sind über in den Figuren 1 bis 5 nicht gezeigte angespritzte Dichtlippen gegen entsprechende Luftkanäle im Lufttrocknergehäuse 13 abgedichtet.

Beim Betrieb der Luftaufbereitungsvorrichtung 10 wird zu reinigende Druckluft, welche flüssige Fluide, beispielsweise Öl- oder Wassertröpfchen, und/oder Schmutzpartikel mit sich führt, in hier nicht weiter interessierender Weise aus einem Druckluftkanal im Lufttrocknergehäuse 13 der Eintrittsöffnung 27 zugeführt. Von dort aus strömt die Druckluft durch den Abscheidekanal 23. Die flüssigen Fluide werden in dem insgesamt spiralförmigen Abscheidekanal 23 radial nach außen zur Außenwandung 18 getragen, wo sie einen Film bilden, der der Schwerkraft folgend nach unten zum Gehäuseboden 21 abfließt. Ebenso werden die Schmutzpartikel nach außen getragen und fallen von dort auf den Gehäuseboden, wo sie von den abgeschiedenen flüssigen Fluiden mitgenommen werden. Die abgeschiedenen flüssigen Fluide fließen dem Gefälle des Gehäusebodens 21 folgend bis zur Fluid-Austrittsöffnung 41, durch den sie aus dem Abscheidekanal 23 austreten. Flüssige Fluide und Schmutzpartikel, die nicht bereits im Eintrittsbereich an der Außenwandung 18 abgeschieden werden, prallen beim Durchströmen der labyrinthartigen Bereiche des Prallabscheideabschnitts gegen die Prallwände 33 oder 35, bilden dort einen Film und sinken zum Gehäuseboden 21. An der Erhebung 39 oder an der Prallplatte 43 werden bis dorthin noch mit der Druckluft mitgeführte Fluide abgeschieden.

Stromabwärts der Fluid-Austrittsöffnung 41 wird die gereinigte Druckluft über die Luftleitrampe 45 nach oben zu dem Aufbau 49 zunächst in axiale Richtung umgeleitet und strömt dort nach einer erneuten Umlenkung in radialer Richtung durch die Reinluft-Austrittsöffnung 51 nach außen. Dabei sorgen die unterschiedlich großen Strömungsquerschnitte dafür, dass die Reinluft durch alle Reinluft-Austrittsöffnungen 51 gleichmäßig ausströmen kann.

Mit dem Abscheider 12 werden auf diese Weise alle flüssigen Fluide und Schmutzpartikel, die mit der Druckluft der Luftaufbereitungsvorrichtung 10 zugeführt werden, abgeschieden, so dass sie sich nicht als kuchenartige Fluid - und/oder Schmutzmasse in der Luftdruckbremsanlage niederschlagen können, was zu Problemen führen kann. Durch die radiale Anordnung der Reinluft-Austrittsöffnungen 51 wird darüber hinaus die direkte Sicht in den Abscheidekanal 23 versperrt, so dass Emulsions- und partikelartige Schmutz- und Rußrückstände optisch weitestgehend verborgen bleiben.

Anstelle der O-Ring Dichtungen 55 und 63 können auch an das Gehäuseunterteil 14 oder dem Gehäusedeckel 16 angespritzte Dichtlamellen oder Dichtlippen zur Abdichtung eingesetzt werden.

## Patentansprüche

1. Luftaufbereitungsvorrichtung (10) insbesondere einer Luftdruckbremsanlage mit einem Abscheider (12) für flüssige Fluide, insbesondere Öl oder Wasser, der ein im Wesentlichen zylindrisches Gehäuse (14, 16) aufweist, das an seinen Stirnseiten über einen Gehäusedeckel (16) und einen Gehäuseboden (21) verfügt, und das in seinem Inneren einen Abscheidekanal (23) aufweist, den die zu reinigende Luft durchströmen kann, wobei der Abscheidekanal (23) in Umfangsrichtung des Gehäuses (14, 16) gebogen verläuft und wenigstens eine Eintrittsöffnung (27) für die zu reinigende Luft, wenigstens eine Fluid-Austrittsöffnung (41) für abgeschiedenes Fluid und wenigstens eine Reinluft-Austrittsöffnung (51) für gereinigte Luft aufweist, **dadurch gekennzeichnet, dass** der Abscheidekanal (23) grob spiralförmig verläuft und stromabwärts der Fluid-Austrittsöffnung (41) eine Luftleitrampe (45) zur Leitung der Reinluft zur Reinluft-Austrittsöffnung (51) aufweist.

2. Luftaufbereitungsvorrichtung nach Anspruch 1, **dadurch gekennzeichnet, dass** die wenigstens eine Eintrittsöffnung (27) in einer radial äußeren Wand (18) des Abscheidekanals (23) angeordnet ist.

3. Luftaufbereitungsvorrichtung nach einem der vorigen Ansprüche, **dadurch gekennzeichnet, dass** die Innenseite der radial äußeren Wand (18) des Abscheidekanals (23) wenigstens einen Abschnitt (31, 39) mit einem verringerten Radius aufweist.

4. Luftaufbereitungsvorrichtung nach einem der vorigen Ansprüche, **dadurch gekennzeichnet, dass** im Abscheidekanal (23) wenigstens eine Prallwand (33, 35, 43) angeordnet ist, die eine zum Strömungsweg senkrechte Flächenkomponente aufweist.

5. Luftaufbereitungsvorrichtung nach Anspruch 4, **dadurch gekennzeichnet, dass** wenigstens zwei Prallwände (33, 35) labyrinthartig zueinander versetzt angeordnet sind.

6. Luftaufbereitungsvorrichtung nach einem der vorigen Ansprüche, **dadurch gekennzeichnet, dass** der Gehäusedeckel (16) an seiner dem Abscheidekanal (23) abgewandten Außenseite einen Aufbau (49) aufweist, der sich wenigstens im Bereich der Luftleitrampe (45) entlang des Abscheidekanals (23) erstreckt und zum Abscheidekanal (23) hin offen ist, wobei in einer radial inneren und/oder einer radial äußeren Seitenwand des Aufbaus (49) wenigstens eine Reinluft-Austrittsöffnung (51) angeordnet ist.

7. Luftaufbereitungsvorrichtung nach Anspruch 6, **dadurch gekennzeichnet, dass** eine Mehrzahl von Reinluft-Austrittsöffnungen (51) in der radial inneren und/oder der radial äußeren Seitenwand des Aufbaus (49) angeordnet ist.

8. Luftaufbereitungsvorrichtung nach Anspruch 7, **dadurch gekennzeichnet, dass** die Strömungsquerschnitte der von der Luftleitrampe (45) weiter entfernten Reinluft-Austrittsöffnungen (51) größer sind als die Strömungsquerschnitte der näher gelegenen Reinluft-Austrittsöffnungen (51).

9. Luftaufbereitungsvorrichtung nach einem der vorigen Ansprüche, **dadurch gekennzeichnet, dass** wenigstens eine Fluid-Austrittsöffnung (41) im Gehäuseboden (21) angeordnet ist.

10. Abscheider (12) für flüssiges Fluid einer Luftaufbereitungsvorrichtung (10) nach einem der vorigen Ansprüche.

## Claims

1. Air purification apparatus (10) in particular of an air pressure brake system with a separator (12) for liquid fluids, in particular oil or water, which features a substantially cylindrical housing (14, 16) that has a housing cover (16) and a housing bottom (21) on its front sides and that features in its interior a separation channel (23) which can be flowed through by the air to be cleaned, wherein the separation channel (23) is curved in circumferential direction of the housing (14, 16) and features at least one inflow opening (27) for the air to be cleaned, at least one fluid outflow opening (41) for separated fluid and at least one clean air outflow opening (51) for cleaned air, **characterized in that** the separation channel (23) extends roughly spirally and features in downstream direction of the fluid outflow opening (41) an air guide ramp (45) for guiding the clean air to the clean air outflow opening (51).

2. Air purification apparatus according to claim 1, **characterized in that** the at least one inflow opening (27) is disposed in a radially outer wall (18) of the separation channel (23).

3. Air purification apparatus according to one of the above claims, **characterized in that** the interior side of the radially outer wall (18) of the separation channel (23) features at least one section (31, 39) with a reduced radius.

4. Air purification apparatus according to one of the above claims, **characterized in that** in the separation channel (23) at least one deflector wall (33, 35, 43) is disposed which features a surface component disposed perpendicular to the flow path.

5. Air purification apparatus according to claim 4, **characterized in that** the at least two deflector walls (33, 35) are offset in relation to each other in a labyrinthine manner.

6. Air purification apparatus according to one of the above claims, **characterized in that** the housing cover (16) features on its exterior side facing away from the separation channel (23) a structure (49) which extends at least in the area of the air guide ramp (45) along the separation channel (23) and is open towards the separation channel (23), wherein in a radially inner and/or radially outer side wall of the structure (49) at least one clean air outflow opening (51) is disposed.

7. Air purification apparatus according to claim 6, **characterized in that** a plurality of clean air outflow openings (51) is disposed in the radially inner and/or radially outer side wall of the structure (49).

8. Air purification apparatus according to claim 7, **characterized in that** the flow cross-sections of the clean air outflow openings (51) located at a larger distance from the air guide ramp (45) are larger than the flow cross-sections of the nearer clean air outflow openings (51).

9. Air purification apparatus according to one of the above claims, **characterized in that** at least one fluid outflow opening 41) is disposed in the housing bottom (21).

10. Separator (12) for liquid fluid of an air purification apparatus (10) according to one of the above claims.

## Revendications

1. Dispositif de traitement de l'air (10), notamment d'un système de freinage pneumatique, avec un séparateur (12) pour des fluides liquides, en particulier pour de l'huile et de l'eau, qui présente un boîtier (14, 16) essentiellement cylindrique qui dispose sur ses faces frontales d'un couvercle de boîtier (16) et d'un fond de boîtier (21) et qui présente dans sa partie intérieure un canal de séparation (23) que l'air à purifier peut traverser, le canal de séparation (23) évoluant de façon courbe en sens circonférentiel du boîtier (14, 16) et étant doté d'au moins une ouverture d'entrée (27) pour l'air à purifier, d'au moins une ouverture de sortie de fluide (41) pour le fluide séparé et d'au moins une ouverture de sortie d'air pur (51) pour l'air purifié, **caractérisé en ce que** le canal de séparation (23) évolue grossièrement en forme de spirale et présente, en aval de l'ouverture de sortie de fluide (41), une rampe déflectrice d'air (45) destinée à acheminer l'air pur vers l'ouverture de sortie d'air pur (51).

2. Dispositif de traitement de l'air selon la revendication 1, **caractérisé en ce que** l'ouverture d'entrée (27), au moins au nombre d'une, est disposée dans une paroi radialement extérieure (18) du canal de séparation (23).

3. Dispositif de traitement de l'air selon l'une des revendications précédentes, **caractérisé en ce que** la face intérieure de la paroi radialement extérieure (18) du canal de séparation (23) présente au moins une section (31, 39) avec un rayon réduit.

4. Dispositif de traitement de l'air selon l'une des revendications précédentes, **caractérisé en ce qu'**au moins un déflecteur (33, 35, 43) présentant une surface verticale par rapport au flux est disposé dans le canal de séparation (23).

5. Dispositif de traitement de l'air selon la revendication 4, **caractérisé en ce qu'**au moins deux déflecteurs (33, 35) sont disposés de façon décalée l'un par rapport à l'autre, à la manière d'un labyrinthe.

6. Dispositif de traitement de l'air selon l'une des revendications précédentes, **caractérisé en ce que** le couvercle du boîtier (16) présente, sur sa face extérieure orientée à l'opposé du canal de séparation (23), une structure (49) qui s'étend, au moins dans la zone de la rampe déflectrice d'air (45), le long du canal de séparation (23) et est ouverte en direction du canal de séparation (23), au moins une ouverture de sortie d'air pur (51) étant positionnée dans une paroi latérale radialement intérieure et/ou radialement extérieure de la structure (49).

7. Dispositif de traitement de l'air selon la revendication 6, **caractérisé en ce que** plusieurs ouvertures de sortie d'air pur (51) sont positionnées dans la paroi latérale radialement intérieure et/ou radialement extérieure de la structure (49).

8. Dispositif de traitement de l'air selon la revendication 7, **caractérisé en ce que** les sections de flux des ouvertures de sortie d'air pur (51) plus éloignées de la rampe déflectrice d'air (45) sont plus grandes que les sections de flux des ouvertures de sortie d'air pur (51) plus proches.

9. Dispositif de traitement de l'air selon l'une des revendications précédentes, **caractérisé en ce qu'**au moins une ouverture de sortie de fluide (41) est disposée au fond du boîtier (21).

10. Séparateur (12) de fluide liquide d'un dispositif de traitement de l'air (10) selon l'une des revendications précédentes.
